(19) Europäisches Patentamt

European Patent Office

Office européen des brevets

(11) **EP 0 567 477 B1**

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(21) Anmeldenummer: **92901751.5**

(22) Anmeldetag: **07.01.1992**

(51) Int Cl.6: **H04N 13/04**

(86) Internationale Anmeldenummer:
**PCT/DE92/00006**

(87) Internationale Veröffentlichungsnummer:
**WO 92/13427 (06.08.1992 Gazette 1992/21)**

(54) **VERFAHREN ZUR WIEDERGABE DREIDIMENSIONALER SZENEN**

PROCESS FOR REPRODUCING THREE-DIMENSIONAL SCENES

PROCEDE DE REPRODUCTION DE SCENES TRIDIMENSIONNELLES

(84) Benannte Vertragsstaaten:
**DE FR GB IT NL**

(30) Priorität: **15.01.1991 DE 4100992**

(43) Veröffentlichungstag der Anmeldung:
**03.11.1993 Patentblatt 1993/44**

(73) Patentinhaber: **SIEMENS AKTIENGESELLSCHAFT**
**80333 München (DE)**

(72) Erfinder: **KUTKA, Robert**
**D-8085 Geltendorf (DE)**

(56) Entgegenhaltungen:
**EP-A- 0 279 092          FR-A- 2 641 875**

**Beschreibung**

Die Erfindung betrifft ein Verfahren zur Wiedergabe dreidimensionaler Szenen, wobei eine exakte Wiedergabe der Geometrie dreidimensionaler Szenen unabhängig von der Bildschirmgröße angestrebt wird. Bei herkömmlichen dreidimensionalen Bildwiedergabesystemen, wie z.B. 3D-Fernsehsystemen, werden die Stereoteilbilder deckungsgleich auf einem Bildschirm abgebildet. Dies hat den sog. Puppenzimmereffekt zur Folge, bei dem die Geometrie der abgebildeten Szene von der Bildschirmgröße abhängt. Bei kleineren Monitoren erscheint dieselbe abgebildete Situation näher und kleiner. Auf großen Bildschirmen erscheint die Geometrie ab einer bestimmten Größe hingegen unnatürlich gestreckt. In einigen Fällen gelingt es dem Betrachter nicht mehr, korrespondierende Punkte des Stereobildes zur Deckung zu bringen, da ihre Disparität, d.h. die Verschiebung zwischen korrespondierenden Punkten vom linken zum rechten Teilbild größer als der Augenabstand ist. Der Betrachter müßte schielen. Aus der Literatur ist keine allgemeine Lösung dieses Problems bekannt.

FR-A-2 641 875 beschreibt ein Verfahren, bei dem die wahrgenommene Größe eines Bildes eines Objekts, dargestellt durch ein Paar von Stereoteilbildern, durch eine Laterale Verschiebung dieser Bilder geändert wird.

Die möglichst wirklichkeitsgetreue Wiedergabe der Geometrie dreidimensionaler Szenen ist bei mehreren technischen Anwendungen der Bildwiedergabe von entscheidender Bedeutung. Neben dem schon genannten 3D Fernsehen spielt die Wiedergabe dreisimensionaler Szenen auch bei anderen Monitoren, wie z.B. bei Monitoren in CAD-Systemen oder in der Computergraphik eine besondere Rolle. Insbesondere in der medizinischen Bildarbeitung kommt der Darstellung dreidimensionaler Strukturen auf zweidimensionalen bildgebenden Systemen eine stets wachsende Bedeutung zu. Bei diesen Anwendungen ist es wichtig, daß eine Szene über Monitore verschiedener Größe in gleicher Qualiltät hinsichtlich der exakten Wiedergabe geometrischer Beziehungen wiedergegeben werden kann.

Der Erfindung liegt die Aufgabe zugrunde, ein Verfahren anzugeben, welches dieses Problem löst. Zur Lösung dieser Aufgabe wird ein Verfahren zur Wiedergabe dreidimensionaler Szenen mit Merkmalen nach Anspruch 1 angegeben.

Vorteilhafte Weiterbildungen der Erfindung ergeben sich aus den abhängigen Ansprüchen.

Figur 1 zeigt die geometrischen Verhältnisse bei der stereoskopischen Abbildung eines Punktes des dreidimensionalen Raumes in eine Bildebene.

Figur 2 zeigt eine geometrische Veranschaulichung des Puppenzimmereffektes.

Figur 3 zeigt eine geometrische Darstellung der Abbildungsverhältnisse bei Bildschirmen verschiedener Größe, welche aus verschiedenen Abständen betrachtet werden.

Figur 4 zeigt eine geometrische Veranschaulichung der erfindungsgemäßen Lösung.

Im folgenden wird die Erfindung anhand eines bevorzugten Ausführungsbeispiels und mit Hilfe der Figuren beschrieben.

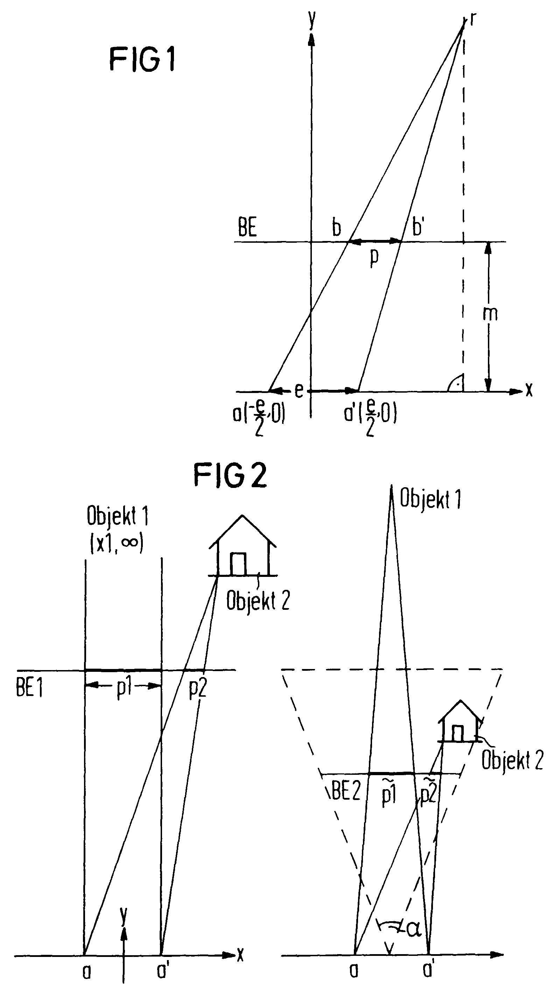

In der binokularen Stereoskopie erzeugen zwei Kameras deren optische Achsen sich im Abstand der Augen eines menschlichen Betrachters befinden zwei Bilder desselben Objekts im Raum. Das Gehirn interpretiert die tatsächlichen geometrischen Verhältnisse der abgebildeten Objekte in korrekter Weise, wenn jedes dieser beiden Bilder den beiden Augen des menschlichen Betrachters in angemessener Weise zugeführt wird. Figur 1 veranschaulicht die geometrischen Verhältnisse bei der Interpretation von Stereobildern sowie die Entstehung von Stereobildern bei der Betrachtung räumlicher Punkte durch zwei Objektive. Ein Objektpunkt r erzeugt, wenn er von zwei Punkten a bzw. a', welche sich im sog. Augenabstand e befinden, betrachtet wird, die beiden Bildpunkte b bzw. b', welche sich im Abstand p befinden. m bezeichnet hierbei den Abstand der Bildebene von den Augen bzw. den Kameras, welcher auch als Monitorabstand bezeichnet wird. Die beiden Verbindungslinien zwischen den Punkten a bzw. a' und dem Punkt r im Raum liegen in der sog. isoparallaktischen Ebene, welche durch diese drei Punkte definiert wird. Der Abstand p ist die sog. Disparität zwischen den Bildpunkten b bzw. b', welche mit Hilfe der in Figur 1 dargestellten Triangulation die Rekonstruktion der Entfernung des Objektpunktes r aus den beiden Stereobildern ermöglicht. Wie aus Figur 1 zu entnehmen ist, ergibt sich die räumliche Lage des Objektpunktes r aus den Bildpunkten b bzw. b', aus dem Augenabstand e und aus der Disparität p nach der Formel

$$(1) \qquad r = \frac{b + b'}{2} \, \frac{e}{e\text{-}p} \, .$$

Aus dieser Formel ist zu erkennen, daß für eine korrekte Wiedergabe der räumlichen Abstände der Augenabstand e bei der Erzeugung der Stereobildpaare bekannt gewesen sein muß, und daß die Stereobildpaare nur bei Verwendung derselben Geometrie bei der Wiedergabe zu einem korrekten räumlich Eindruck führen können.

Figur 2 verdeutlicht die Entstehung von Verzerrungen bei der Wiedergabe dreidimensionaler Szenen über Bildschirme anderer Größe, welche aus anderen Abständen betrachtet werden. Diese Verzerrungen werden auch als Puppenzimmereffekt bezeichnet. Zwei Objekte, von denen sich eines (Objekt 1) in unendlicher Entfernung vom Betrachter befindet, erzeugen bei der Abbildung auf einen Bildschirm BE1 Bildpunkte mit den Disparitäten p1 bzw. p2. Werden nun dieselben Stereobilder über einen kleineren Bildschirm BE2 wiedergegeben, so werden alle Disparitäten in gleichem Maße wie die Bildschirme verkleinert.

Es sei angenommen, daß auch der Betrachterabstand im selben Maße verkleinert wird. In diesem Falle ist der Betrachtungswinkel α konstant. Aus den ursprünglichen Disparitäten p1 und p2 werden nun die Disparitäten $\tilde{p1}$ bzw. $\tilde{p2}$. Werden solche Bildpaare aus dem dieser Bildverkleinerung entsprechenden Betrachterabstand mit gleichem Augenabstand betrachtet, so wird, wie aus Figur 2 ersichtlich, dem Objekt 1 nun eine endliche Entfernung vom Betrachter zugeordnet, und das Objekt 2 befindet sich scheinbar näher am Betrachter und erscheint diesem kleiner. Dieser Effekt wird als Puppenzimmereffekt bezeichnet.

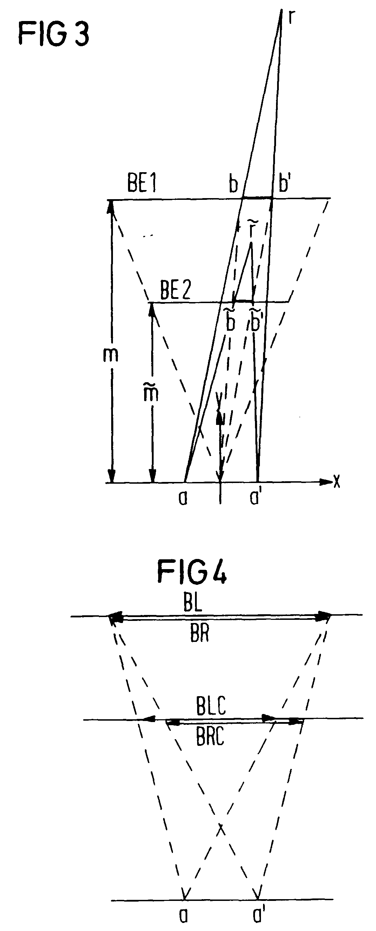

Die allgemeinen geometrischen Verhältnisse bei der Skalierung des Betrachterabstandes m, der Bildschirmgröße und der Disparitäten p zeigt Figur 3. Aus den ursprünglichen Bildpunkten b bzw. b' und der Disparität p werden die Bildpunkte $\tilde{b}$ bzw. $\tilde{b'}$ und die Disparität $\tilde{p}$, , welche über die Formeln

$$(2) \qquad \tilde{b} = f \ b$$

$$\tilde{b'} = f \ b'$$

$$\tilde{p} = f \ p$$

mit den ursprünglichen Größen zusammenhängen. Dabei ist f ein Verkleinerungs- bzw. Vergrößerungsfaktor, welcher sich direkt als Quotient der Monitorgrößen bzw. Monitorabstände ergibt. Aus Figur 3 ist zu entnehmen, daß die rekonstruierten Objektpunkte r bzw. $\tilde{r}$ nicht identisch sind, sondern daß die mit Hilfe eines kleineren Bildes rekonstruierten Objektpunkte sich näher am Betrachter befinden. Dieser Umstand führt zu falschen räumlichen Eindrücken.

Die mit dieser Verschiebung der rekonstruierten Raumpunkte einhergehende Verzerrung des räumlichen Eindrucks durch den Betrachter kann auf einfache Weise dadurch vermieden werden, daß die korrespondierenden Bildpunkte in den Stereobildpaaren gegeneinander verschoben werden. Figur 4 zeigt dies in anschaulicher Weise. Bei gegebenem Verkleinerungsfaktor f und bei gegebenem Augenabstand e führt eine relative Verschiebung der korrespondierenden Bildpunkte in der isoparallaktischen Ebene um die Strecke

$$(3) \qquad d = e \cdot (f - 1)$$

zu einer völligen Beseitigung der Verzerrung. Eine solche Verschiebung kann auch dadurch erreicht werden, daß beide Bilder in entgegengesetzte Richtungen um die Hälfte der in Gleichung (3) angegebenen Strecke verschoben werden.

Es ist ein besonderer Vorteil dieser Lösung, daß die zur Korrektur notwendige Verschiebung d allein von dem Verhältnis der Bildschirmgrößen bzw. Bildschirmentfernungen f und von dem Augenabstand e abhängig ist. Aus diesem Grunde braucht diese Korrektur bei einem gegebenen Bildschirm in der Praxis nur ein für alle Mal durchgeführt zu werden.

## Patentansprüche

1. Verfahren zur Wiedergabe eines Bildes einer dreidimensionalen Szene in verschiedenen Bildgrößen mit Hilfe mindestens zweier Stereoteilbilder, bei dem korrespondie-rende Bildpunkte in Abhängigkeit von der Bildgröße gegeneinander verschoben werden, so daß bei einem gegebenen Betrachtungswinkel und einem gegebenen Augenabstand geometrische Beziehungen unabhängig von der Bildgröße exakt wiedergegeben werden.

2. Verfahren nach Anspruch 1 mit einer für alle Bildpunkte gleichen Verschiebung.

3. Verfahren nach Anspruch 2, mit einem Stereobildpaar, dessen korrespondierende Bildpunkte um

$$d = e \cdot (f\text{-}1)$$

in der isoparallaktischen Ebene gegeneinander verschoben werden, wobei

d die relative Verschiebung,

f einen Bildverkleinerungs- bzw. -vergrößerungsfaktor und

e den Augenabstand bezeichnet.

## Claims

1. Process for reproducing an image of a three-dimensional scene in different image sizes with the aid of at least two stereo part images, in which process corresponding image points are shifted relative to one another in dependence upon the image size, so that, with a given viewing angle and a given interocular distance, geometric relationships are precisely reproduced independently of the image size.

2. Process according to Claim 1, in which the shift is the same for all image points.

3. Process according to Claim 2, which makes use of a stereo image pair, the corresponding image points of which are shifted relative to one another by

$$d = e \cdot (f - 1)$$

in the isoparallactic plane, where

d    is the relative shift,
f    is an image reduction or magnification factor and
e    is the interocular distance.

## Revendications

1. Procédé de reproduction d'une image d'une scène tridimensionnelle en différentes grandeurs d'image à l'aide d'au moins deux trames stéréo, dans lequel des points d'image correspondants sont déplacés les uns contre les autres en fonction de la grandeur d'image, de sorte qu'avec un angle d'observation donné et un écart interpupillaire donné, des rapports géométriques sont reproduits de façon exacte indépendamment de la grandeur de l'image.

2. Procédé selon la revendication 1 comportant un décalage semblable pour tous les points d'image.

3. Procédé selon la revendication 2, comportant un couple d'images stéréo dont les points d'image correspondants sont déplacés les uns contre les autres de

$$d = e. (f-1)$$

dans le plan isoparallactique, d désignant le déplacement relatif, f un facteur de réduction d'image ou d'agrandissement d'image et e l'écart interpupillaire.

FIG 1

FIG 2

FIG 3

FIG 4